# EUROPEAN PATENT APPLICATION

(11) **EP 1 603 099 A1**
(43) Date of publication of application: **07.12.2005**
(21) Application number: 05011792.8
(22) Date of filing: 01.06.2005
(51) Int. Cl.: G09B 23/12

(54) **Scientific phenomena evaluation device and scientific phenomena evaluation method using the device**

(30) Priority: 01.06.2004 JP 2004163235
(71) Applicant: FUJI PHOTO FILM CO., LTD., Kanagawa (JP)
(72) Inventor: Ueyama, Tomohide, Minami-Ashigara-shi Kanagawa (JP); Ichikawa, Yasunori, Minami-Ashigara-shi Kanagawa (JP)
(74) Representative: HOFFMANN EITLE

(57) **Abstract**

There is provided a scientific phenomena evaluation device including: a base plate (12) in which a plurality of long grooves (14,16, 20) having sectional areas of 1 mm² or less are formed in a surface; and a cover plate (22) that is bonded to the surface of the base plate (12) and covers the long grooves (14,16, 20) to form a plurality of minute channels (14A, 16A, 20A) in the base plate (12), wherein one ends of the plurality of channels (14A, 16A, 20A) merge at one merging point (18), and the other ends of the plurality of channels (14A, 16A, 20A) communicate with reservoirs (24, 26, 28) having capacities of 5 to 5000 mm³, one or more of the reservoirs (28) are formed to house an absorption device, and scientific phenomena in the channels (14A, 16A, 20A) are visually perceivable.

## Description

### BACKGROUND OF THE INVENTION

### Field of the Invention

The present invention relates to a scientific phenomena evaluation device and a scientific phenomena evaluation method using the device, and more particularly to a scientific phenomena evaluation device and a scientific phenomena evaluation method using the device that are inexpensive, environmentally friendly, and appropriate for enjoying high technology with ease.

### Description of the Related Art

Various types of scientific phenomena evaluation devices and scientific experiment education materials have been proposed (see Japanese Patent Application Laid Open No. 2000-242162).

For example, Japanese Patent Application Laid Open No. 2000-242162 discloses a science education material that allows observation of natural phenomena by temperature changes of water by cooling or freezing water vapor in the air or water or water vapor in a container, is small in size and simple in structure, and is capable of faithfully reproducing various kinds of natural phenomena by temperature changes of water.

As scientific experimental devices for education, experimental kits such as "Science and Learning: Experimental Kit Series" and "Scientific Global Environment Analysis Kit for Adults" are available from Gakken Co., Ltd. Such experimental kits, which provide dream to children or enjoyment of experiments to users, are available at relatively low prices of about a few hundred yen to three thousand yen and well received.

Such a conventional scientific phenomena evaluation device as described in Japanese Patent Application Laid Open No. 2000-242162, however, has a relatively complex configuration and is not available at low price, and is thus inappropriate for all students in the class to buy.

On the other hand, experimental kits having relatively simple configurations are often available at relatively low prices, and appropriate for all students in the class to buy. However, such kits have poor finishing accuracy and use a large amount of chemicals, and if all students in the class use the kits, it is environmentally unfriendly in terms of wastewater treatment or the like and undesirable.

Also, such conventional experimental kits provide experience of classical scientific experiments, and an extremely limited number of kits provide enjoyment of high technology with ease.

In view of such circumstances, the inventors consider a scientific phenomena evaluation device including a base plate in which long grooves having minute sectional areas are formed in a surface, and a cover plate that is bonded to the surface of the base plate and covers the long grooves to form minute channels in the base plate, scientific phenomena in the channels being visually perceivable, desirable as a scientific phenomena evaluation device that are inexpensive, environmentally friendly, and appropriate for enjoying high technology with ease.

### SUMMARY OF THE INVENTION

However, a method of flowing a liquid in channels of such an evaluation device needs to be designed in a particular manner. Specifically, pressurization or pressure reduction using a pump or the like is a general feeding method, but when such a feeding method is used to flow the liquid into the minute channels, there tend to be variations among individuals, which is not preferable for an experimental kit. Specifically, when the pump or the like is used, a large difference in the amount of flow is caused depending on the degree of force, thereby lacking quantification.

Also, a convenient experimental kit without a pump or the like is preferable as an experimental kit that has a relatively simple configuration, and is inexpensive and appropriate for all students in the class to buy.

Further, a feeding method using a volume change of a gas caused by heating or cooling is supposed, and this method rarely causes a large difference in the amount of flow, thereby preventing lack of quantification. However, an experiment is finished in a short time with such a feeding method, which is not appropriate for a scientific phenomena evaluation device.

The invention is achieved in view of such circumstances, and has an object to provide a scientific phenomena evaluation device and a scientific phenomena evaluation method using the device that are inexpensive, environmentally friendly, and appropriate for enjoying high technology with ease.

In order to achieve the above described object, the invention provides a scientific phenomena evaluation device including: a base plate in which a plurality of long grooves having sectional areas of 1 mm² or less are formed in a surface; and a cover plate that is bonded to the surface of the base plate and covers the long grooves to form a plurality of minute channels in the base plate, wherein one ends of the plurality of channels merge at one merging point, and the other ends of the plurality of channels communicate with reservoirs having capacities of 5 to 5000 mm³, one or more of the reservoirs are formed to house an absorption device, and scientific phenomena in the channels are visually perceivable.

According to the invention, in the evaluation device, the plurality of minute channels having the sectional areas of 1 mm² or less are formed, one ends of the channels merge at one merging point, and the reservoir houses the absorption device, thereby allowing qualitative observation of scientific phenomena such as a molecular diffusion phenomenon. The evaluation device provides adequate accuracy for experiencing high technology, for example, various kinds of phenomena such as a diffusion phenomenon of a liquid, a heat transfer phenomenon of a liquid, a mixing phenomenon of a liquid, or a chemical reaction of a liquid (for example, an acid/alkali reaction or a hydrolysis reaction) that occur in the minute channels, and uses a small amount of chemicals to be environmentally friendly. Such a scientific phenomena evaluation device is appropriate as a scientific experiment education material.

Particularly, because the absorption device can be used instead of a feeding device by pressurization or pressure reduction using a pump or the like, there are few variations among individuals, and the evaluation device has a simple configuration, is inexpensive and convenient, and further allows observation of scientific phenomena for a relatively long time.

The sectional area of each minute channel is preferably 1 mm² or less, more preferably 0.0025 to 0.64 mm², and most preferably 0.01 to 0.25 mm².

The reservoir is usually hollow, and chemicals are supplied into the reservoir when the evaluation device is operated.

The invention also provides a scientific phenomena evaluation device including: a base plate in which a plurality of long grooves having sectional areas of 1 mm² or less are formed in a surface; and a cover plate that is bonded to the surface of the base plate and covers the long grooves to form a plurality of minute channels in the base plate, wherein one ends of a first channel and a second channel that are two of the channels having substantially the same length merge at one merging point, the other end of the first channel communicates with a first reservoir having a capacity of 5 to 5000 mm³, the other end of the second channel communicates with a second reservoir having a capacity of 5 to 5000 mm³, one end of a third channel that is one of the channels communicates with the merging point, and the other end of the third channel communicates with a third reservoir having a capacity of 5 to 5000 mm³, one or more of the reservoirs are formed to house an absorption device, and scientific phenomena in the channels are visually perceivable.

According to the invention, in the evaluation device, the three minute channels having the sectional areas of 1 mm² or less are formed, one ends of the channels merge at one merging point, and the reservoir houses the absorption device, thereby allowing qualitative observation of scientific phenomena such as a molecular diffusion phenomenon. The evaluation device provides adequate accuracy for experiencing high technology, and uses a small amount of chemicals to be environmentally friendly. Such a scientific phenomena evaluation device is appropriate as a scientific experiment education material.

Particularly, because the absorption device can be used instead of a feeding device by pressurization or pressure reduction using a pump or the like, there are few variations among individuals, and the evaluation device has a simple configuration, is inexpensive and convenient, and further allows observation of scientific phenomena for a relatively long time.

The invention also provides a scientific phenomena evaluation method using a scientific phenomena evaluation device including the steps of: supplying a liquid to one or more of reservoirs; housing an absorption device in another one or more of the reservoirs that is formed to house the absorption device to absorb the supplied liquid by the absorption device; and flowing the liquid in channels and visually perceiving a state of the liquid.

In the invention, a member having a water absorption of 5g/g or more is preferably used as the absorption device. The absorption device having such a performance allows a smooth flow of the liquid in the channels and facilitates observation of scientific phenomena. The water absorption is more preferably 10g/g or more, and most preferably 30g/g or more.

The water absorption means a ratio between the weight of the member after absorbing water and the weight of the member when dried. The weight of the member after absorbing water is a measured value when twenty minutes have passed since starting to absorb water under atmospheric pressure.

In the invention, it is preferable that the liquid supplied to one or more of the reservoirs is caused to communicate with another one or more of the reservoirs via the channel before the absorption device is housed in another one or more of the reservoirs, and the absorption device is housed in another one or more of the reservoirs to start the flow of the liquid in the channel.

In this manner, by filling the channels with the liquid before starting an experiment, the absorption device is housed in the reservoir to allow starting the experiment and facilitate the experiment, thereby providing a preferable scientific experiment education material.

The scientific phenomena are various kinds of chemical or physical phenomena that occur in the minute channels and include a diffusion phenomenon of a liquid, a heat transfer phenomenon of a liquid, a mixing phenomenon of a liquid, or a chemical reaction of a liquid (for example, an acid/alkali reaction or a hydrolysis reaction).

As described above, according to the invention, because the absorption device can be used in the evaluation device, there are few variations among individuals, and the evaluation device has a simple configuration, is inexpensive and convenient, and further allows observation of scientific phenomena for a relatively long time.

### BRIEF DESCRIPTION OF THE DRAWINGS

Fig. 1 is a plan view of a configuration of a scientific phenomena evaluation device according to the invention;
Fig. 2 is a partial enlarged sectional view of Fig. 1;
Fig. 3 is a partial enlarged sectional view of Fig. 1;
Figs. 4A to 4D are sectional views of a procedure of an experimental method;
Figs. 5A and 5B are sectional views of the procedure of the experimental method; and
Figs. 6A and 6B are sectional views of the procedure of the experimental method.

### DETAILED DESCRIPTION OF THE PREFERRED EMBODIMENTS

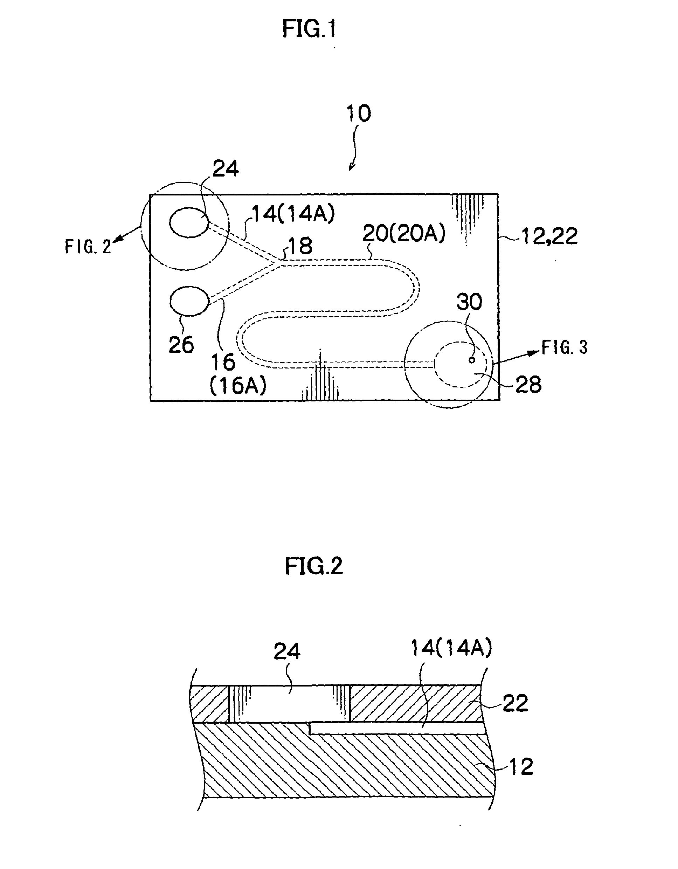

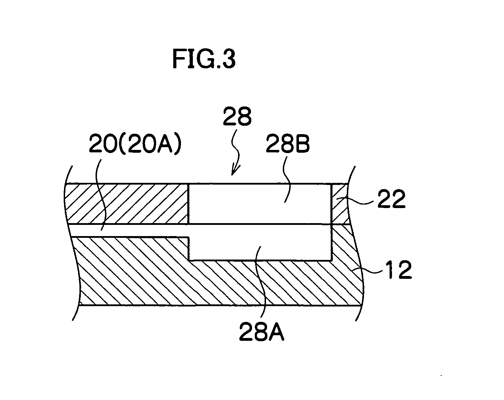

Now, a preferred embodiment (a first embodiment) of a scientific phenomena evaluation device and a scientific phenomena evaluation method using the device according to the invention will be described in detail with reference to the accompanying drawings. Fig. 1 is a plan view of a configuration of a scientific experiment education material 10 that is a scientific phenomena evaluation device according to the invention. Figs. 2 and 3 are partial enlarged sectional views of Fig. 1, Fig. 2 shows a first reservoir 24 (within a dotted line at an upper left portion in Fig. 1), and Fig. 3 shows a third reservoir 28 (within a dotted line at a lower right portion in Fig. 1).

Specifically, the scientific experiment education material 10 includes a base plate 12 in which long grooves 14, 16 and 20 having sectional areas of 1 mm² or less are formed in a surface, and a transparent cover plate 22 that is bonded to the surface of the base plate 12 and covers the long grooves to form minute channels 14A, 16A and 20A in the base plate 12.

The minute channels formed by the long grooves 14, 16 and 20 include a first channel 14A and a second channel 16A that have substantially the same length and merge at a merging point 18, and a third channel 20A that further merges with the first channel 14A and the second channel 16A at the merging point 18.

The other end of the first channel 14A communicates with the first reservoir 24 that is a cylindrical hollow portion formed in the cover plate 22, the other end of the second channel 16A communicates with a second reservoir 26 that is a cylindrical hollow portion formed in the cover plate 22, and the other end of the third channel 20A communicates with the third reservoir 28 that includes a cylindrical hollow portion 28A formed in the base plate 12 and a cylindrical hollow portion 28B formed in a corresponding portion in the cover plate 22.

The cylindrical hollow portion 28B of the third reservoir 28 is a through hole formed in the cover plate 22, and the third reservoir 28 is formed to house a below described absorption device.

The capacities of the first reservoir 24 and the second reservoir 26 are preferably 5 to 5000 mm³, and the capacity of the third reservoir 28 is preferably 10 to 10000 mm³. Such capacities facilitate control of phenomena that occur in micro channels.

Sizes of planes of the base plate 12 and the cover plate 22 are not limited, but the planes may be of a portable size of, for example, 80 x 50 mm in view of the nature of the scientific experiment education material 10 used at school. Thicknesses of the base plate 12 and the cover plate 22 are not limited but may be, for example, about 5 mm in view of strengthen, cost efficiency, or the like.

A material of the base plate 12 is not limited, but resin materials, more specifically, polydimethyl sulfoxide (PDMS), polymethylmethacrylate (PMMA), polyvinyl chloride (PVC), ultraviolet curable resin, and polycarbonate (PC), or the like may be preferably used in terms of facilitating a below described manufacturing method.

The sectional area of each of the long grooves 14, 16 and 20 formed in the surface of the base plate 12 is preferably 1 mm² or less, more preferably 0.0025 to 0.64 mm², and most preferably 0.01 to 0.25 mm² as described above. The sectional shape of each of the long grooves 14, 16 and 20 is not limited, but may be selected from various kinds of shapes such as a rectangular shape (a square or a rectangle), a trapezoidal shape, a V shape, or a semicircular shape. The rectangular shape (the square or the rectangle) is preferable in terms of facilitating the below described manufacturing method.

A material of the cover plate 22 is not limited, but the cover plate 22 is preferably transparent in order to allow scientific phenomena in the channels to be visually perceived. As such a material, various types of resin plates, more specifically, polydimethyl sulfoxide (PDMS), polymethylmethacrylate (PMMA), polyvinyl chloride (PVC), and ultraviolet curable resin, and polycarbonate (PC), or the like, various types of resin films, more specifically, polyethylene terephthalate (PET), polyethylene naphthalate (PEN), and triacetyl cellulose (TAC), or the like, and various types of glass (soda lime glass, borosilicate glass, or the like) may be used.

The cover plate 22 is generally a flat plate having flat front and back surfaces, but may have a configuration such that a front surface at portions corresponding to the minute channels 14A, 16A and 20A may be formed into semi-cylindrical convex lens shapes to allow observation in an enlarged state.

Such a configuration that the cover plate 22 is opaque and the base plate 12 is transparent may be used.

Ensuring sufficient flatness of a front surface of the base plate 12 (a surface in which the long grooves are formed) and a back surface of the cover plate 22 (a surface bonded to the base plate 12) is preferable in terms of forming the channels 14A, 16A and 20A and preventing leak.

Next, a forming method of the base plate 12 will be described. First, an inverted mold is prepared having a surface in which inverted shapes of the long grooves 14, 16 and 20 in the base plate 12 are formed. In the surface of the inverted mold, an inverted shape of the cylindrical hollow portion 28A needs to be further formed. As a manufacturing method of the inverted mold, various types of known machining methods may be used such as machining by a machining center or the like, electrical discharge machining, ultrasonic machining, or photoetching.

Then, a release agent is applied to the surface of the inverted mold. An appropriate release agent may be used depending on a type or a machining condition (a temperature or the like) of a resin material for the base plate 12.

Next, the resin material is applied to the surface of the inverted mold and cured. When the resin material is an ultraviolet curable resin, the applied resin material is irradiated with ultraviolet light and cured. When the resin material is a thermoplastic resin such as polyvinyl chloride (PVC), the resin material is brought into contact with the surface of the inverted mold and heat transfer molded by a hot pressing machine.

Then, the cured resin material is released from the inverted mold.

Such a method allows the long grooves to be formed with high accuracy at low price, thereby providing an inexpensive evaluation device.

Next, a using method of the scientific experiment education material 10 according to the invention will be described. For the scientific experiment education material 10, the following members 1) to 12) need to be provided as a set.
1) The inverted mold
2) The resin material for the base plate 12
3) A frame for forming the base plate 12 (used as a frame when the resin is poured in forming the base plate 12)
4) The cover plate 22
5) A sample liquid dropper (used for supplying necessary sample liquids (reagents) into the first reservoir 24 and the second reservoir 26 depending on test purposes. A dropper exclusive to each chemical may be prepared, or one dropper may be cleaned and reused.)
6) A sealing tape for a sample liquid orifice (which serves as a lid of the first reservoir 24 and the second reservoir 26 that are supply halls of the sample liquids, and is for closing the first reservoir 24 and the second reservoir 26 after the sample liquids are supplied into the first reservoir 24 and the second reservoir 26 with a pipette.)
7) A needle (for boring a hole in the tape as required in order to feed air of varied amounts of the sample liquids into the first reservoir 24 and the second reservoir 26 when the liquids are supplied and received in the case where the sample liquids are supplied.)
8) A casing (mounted for preventing leak from between the cover plate 22 and the base plate 12 or preventing damage to the cover plate 22 or the like when the experimental set is assembled. Various functions for experimental purposes, for example, a magnifying glass or the like for facilitating observation of the channels may be mounted to the casing.)
9) A feeding device
   (The feeding method uses a phenomenon in which applying heat to the first reservoir 24 and the second reservoir 26 with the first reservoir 24 and the second reservoir 26 being closed by the tape (placing a fingertip on the tape and heating the tape by body heat, or the like) causes the volume expansion of the liquid and/or the gas in the first reservoir 24 and the second reservoir 26.
   A method for pressurizing the insides of the first reservoir 24 and the second reservoir 26 using the principle of a pump to feed the liquids out of the first reservoir 24 and the second reservoir 26, or the like is possible.)
10) An absorption device
   An absorption device is used that allows a smooth flow of the liquid in the channels and facilitates observation of scientific phenomena. The water absorption of the absorption device is preferably 5g/g or more, more preferably 10g/g or more, and most preferably 30g/g or more.
   As such an absorption device, various types of known members may be used such as absorbent polymers, cotton, or gauze that are used in sanitary napkins or disposable diapers.
   Such an absorption device is preferably previously cut into sizes that are easily housed in the third reservoir 28. The absorption device is preferably packed in small quantities in order to prevent absorbing moisture.
11) Test sample liquids (reagents)
   (The chemicals suitable for a purpose are placed in a reagent container and supplied as test reagents for the scientific experiment. For example, the sample liquids include a colored liquid such as a dye or a pigment, and a transparent liquid such as water).
12) An experiment guide
   (A guide of events that can be learned by this set describing a purpose of the experiment conducted using the set, explanation on the phenomena, applications, or the like is attached if required.)
13) An experimental method procedure manual
   This set is adapted for students to make the base plate 12 by hand, but if the step of making the base plate 12 by hand is omitted, a completed base plate 12 may replace 1) to 3).

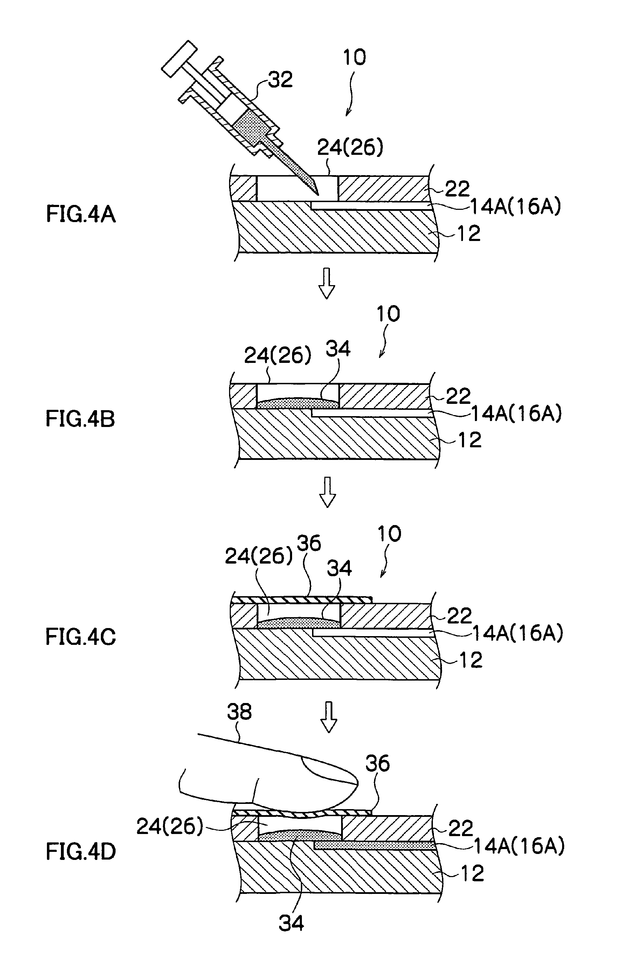

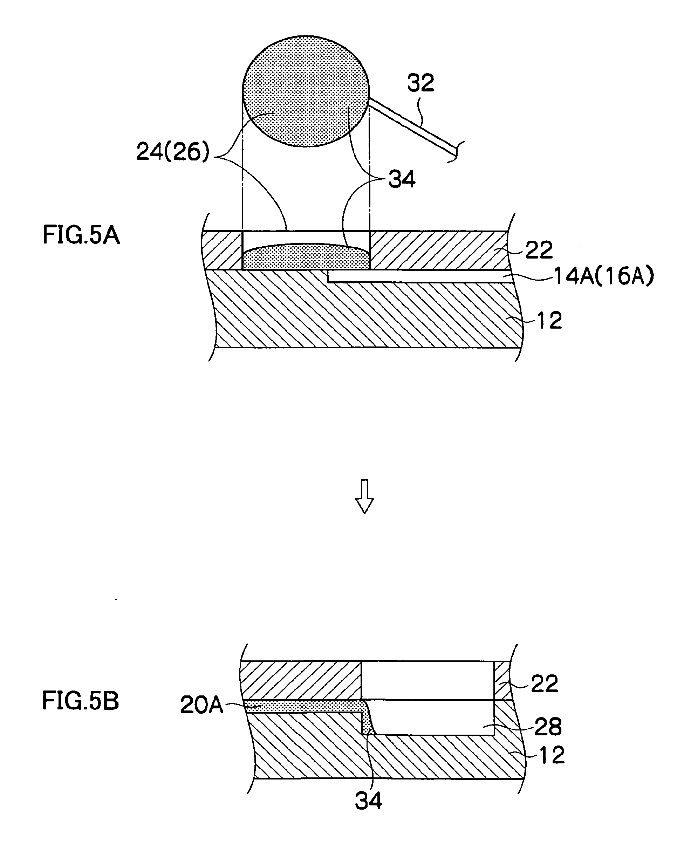

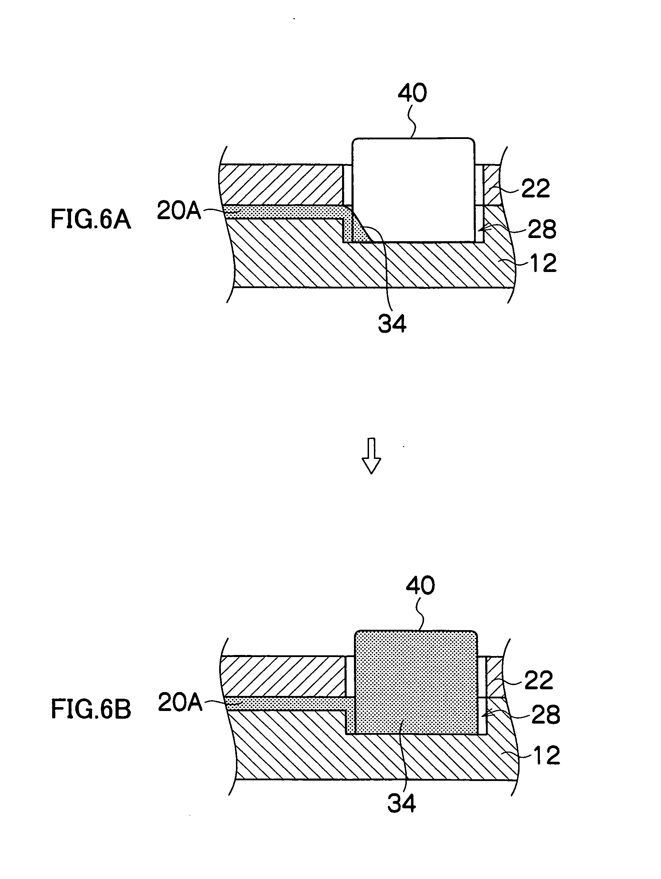

Details of the experiment using the set will be now described. Figs. 4, 5 and 6 are sectional views of a procedure of the experimental method. Fig. 4 shows a time-series procedure in the first reservoir 24 and the second reservoir 26. Fig. 5A shows a state where the sample liquid is supplied to the first reservoir 24 and the second reservoir 26, and Fig. 5B shows a state before a start of the experiment where a leading part of the sample liquid reaches the third reservoir 28. Fig. 6 shows the third reservoir 28, Fig. 6A shows an experiment start state, and Fig. 6B shows an experiment finish state.

As shown in Fig. 4A, a predetermined amount of sample liquid 34 is supplied into the first reservoir 24 (or the second reservoir 26) by a sample liquid dropper 32. The sample liquid 34 is supplied so as to block a portion communicating with the channel 14A (or 16A) in the first reservoir 24 (or the second reservoir 26) as shown in Figs. 4B and 5A.

Then, as shown in Fig. 4C, the first reservoir 24 (or the second reservoir 26) is closed by a tape 36 for sealing a sample liquid orifice. The tape 36 is coated with an adhesive material on one surface (a lower surface in the drawing) and seals the first reservoir 24 (or the second reservoir 26) from the outside air.

Then, a fingertip 38 is placed on the tape 36 as shown in Fig. 4D. This causes the feeding device to be formed in the first reservoir 24 (or the second reservoir 26). As described above, the feeding device operates so that the heat of the fingertip 38 causes the volume expansion of the gas in the first reservoir 24 (or the second reservoir 26) to feed the sample liquid 34 into the channel 14A (or 16A).

In a configuration similar to the configuration in Fig. 4D, the feeding device may operate so that the tape 36 is pushed by the fingertip 38 and bent downward to reduce the capacity of the first reservoir 24 (or the second reservoir 26), thereby feeding the sample liquid 34 into the channel 14A (or 16A).

By the above described feeding device, the leading part of the sample liquid 34 reaches the third reservoir 28 to enter the state before the start of the experiment as shown in Fig. 5B.

The experiment is started by housing the absorption device 40 in the third reservoir 28 as shown in Fig. 6A.

Then, the sample liquids are absorbed by the absorption device 40 from the first reservoir 24 and the second reservoir 26 in Fig. 1, and at the same time, the sample liquids 34 are fed into the channel 14A and the channel 16A, thereby allowing observation of merging of the sample liquids 34 at the merging point 18.

Particularly, the sample liquid 34 supplied to the first reservoir 24 and the sample liquid 34 supplied to the second reservoir 26 are differently colored to facilitate observation of the merging of the sample liquids 34 at the merging point 18. For example, a colored sample liquid 34 is supplied to the first reservoir 24, and a transparent and colorless sample liquid 34 is supplied to the second reservoir 26.

An observer can observe the channel 20A downstream of the merging point 18 of the sample liquids 34 flowing in this manner and thus confirm a phenomenon in which colored molecules such as a dye or a pigment are diffused toward the transparent liquid from the side of the colored liquid flowing in the micro channel.

Sample liquids 34 of different colors and also of different viscosities are supplied to the first reservoir 24 and the second reservoir 26 to allow observation of the sample liquids 34 merging at the merging point 18 in a different manner.

In order to facilitate observation of such phenomena, a hand lens or a magnifying glass may be used. The cover plate 22 at the portion corresponding to the channel 20A may have a magnifying glass function (a lens function) as descried above.

By the above described procedure, as shown in Fig. 6B, the experiment is finished when the absorption device 40 absorbs the sample liquid 34 and cannot absorb any more liquid or when the sample liquid 34 (see Fig. 4B and Fig. 5A) supplied to the first reservoir 24 (or the second reservoir 26) is lost. From the start to the finish of the experiment, scientific phenomena can be observed for a relatively long time without any operation.

Next, another embodiment (a second embodiment) of a scientific phenomena evaluation method according to the invention will be described. In the first embodiment, the sample liquid 34 is fed into the channel 14A (or 16A) by the feeding device so that the leading part of the sample liquid 34 reaches the third reservoir 28 to enter the state before the start of the experiment.

On the other hand, in this embodiment, water is fed into the channel 14A (or 16A) by the feeding device so that the leading part of the water reaches the third reservoir 28 to enter the state before the start of the experiment. Then, extra water outside the channels 14A, 16A and 20A is entirely removed.

Next, the sample liquids 34 are supplied to the first reservoir 24 and the second reservoir 26, and then the absorption device 40 is housed in the third reservoir 28 to start the experiment.

According to the embodiment, the water in the channels 14A, 16A and 20A are hard to evaporate, thereby allowing the state before the start of the experiment to be maintained for a long time and facilitating the experiment. Even if the sample liquids 34 are easy to evaporate, the experiment can be started substantially at the same time as the sample liquids 34 are supplied to the first reservoir 24 and the second reservoir 26, thereby also facilitating the experiment.

The scientific experiment education material 10 described above includes important parts that are simplified as much as possible and inexpensive, and allows experiments with high accuracy in order for children to conduct scientific experiments in microworld with enjoyment and dream.

Particularly, in qualitative observation of a molecular diffusion phenomenon that forms the basis of a chemical reaction, it is important that a plurality of liquids flow in the channels under the same condition in order to increase experimental accuracy, and such a requirement is sufficiently met. Specifically, a relatively accurate experiment can be conducted with a simple and inexpensive device. The experiment is conducted in the microworld, and thus requires an extremely small amount of chemicals such as a dye or a pigment to be environmentally friendly.

Most of the used chemicals (the used sample liquids 34) are absorbed by the absorption device 40, thereby also facilitating wastewater treatment.

The embodiments of the scientific phenomena evaluation device, the scientific experiment education material, and the manufacturing method thereof have been described above, but the invention is not limited to the embodiments, various aspects may be adopted.

For example, in the embodiment, the example of the experiment education material has been described that allows observation of the phenomenon in which the two kinds of sample liquids 34 merge at the merging point 18 and the colored molecules such as the dye or the pigment are diffused toward the transparent liquid, but various types of other experiment education materials may be applied.

In the embodiment, the first reservoir 24 and the second reservoir 26 are formed in the cover plate 22, and the third reservoir 28 is formed in the base plate 12 and the cover plate 22, but other aspects, for example, an aspect of forming all the reservoirs in the base plate 12 and the cover plate 22 may be adopted.

In the embodiment, three sets of channels and reservoirs are provided, but four or more sets of channels and reservoirs may be provided.

Further, the sample liquid dropper 32 is used to supply the sample liquid (reagent) to the reservoir (24, 26, or the like), but an injector or a micro syringe having the same function may replace the sample liquid dropper 32. Generally, an inexpensive dropper is preferably used for a scientific experiment education material. Depending on test purposes, however, the injector or the micro syringe having the same function is sometimes preferably used as described above.

## Claims

1. A scientific phenomena evaluation device comprising:
a base plate (12) in which a plurality of long grooves (14, 16, 20) having sectional areas of 1 mm² or less are formed in a surface; and
a cover plate that is bonded to the surface of the base plate (12) and covers the long grooves (14,16, 20) to form a plurality of minute channels (14A, 16A, 20A) in the base plate (12),
**characterized in that** one ends of the plurality of channels (14A, 16A, 20A) merge at one merging point (18), and the other ends of the plurality of channels (14A, 16A, 20A) communicate with reservoirs (24, 26) having capacities of 5 to 5000 mm³,
one or more of the reservoirs are formed to house an absorption device, and
scientific phenomena in the channels are visually perceivable.

2. A scientific phenomena evaluation device comprising:
a base plate (12) in which a plurality of long grooves (14, 16, 20) having sectional areas of 1 mm² or less are formed in a surface; and
a cover plate (22) that is bonded to the surface of the base plate (12) and covers the long grooves (14,16, 20) to form a plurality of minute channels (14A, 16A, 20A) in the base plate (12),
**characterized in that** +-one ends of a first channel (14A) and a second channel (16A) that are two of the channels having substantially the same length merge at one merging point (18),
the other end of the first channel (14A) communicates with a first reservoir (24) having a capacity of 5 to 5000 mm³,
the other end of the second channel (16A) communicates with a second reservoir (26) having a capacity of 5 to 5000 mm³,
one end of a third channel (20A) that is one of the channels communicates with the merging point (18), and the other end of the third channel (20A) communicates with a third reservoir (28) having a capacity of 5 to 5000 mm³,
one or more of the reservoirs are formed to house an absorption device, and
scientific phenomena in the channels are visually perceivable.

3. A scientific phenomena evaluation method using a scientific phenomena evaluation device according to claim 1 or 2, comprising the steps of:
supplying a liquid (34) to one or more of reservoirs (24, 26);
housing an absorption device in another one or more of the reservoirs (24, 26) that is formed to house the absorption device to absorb the supplied liquid (34) by the absorption device; and
flowing the liquid (34) in channels (14A, 16A, 20A) and visually perceiving a state of the liquid (34).

4. The scientific phenomena evaluation method according to claim 3, **characterized in that** a member having a water absorption of 5g/g or more is used as the absorption device.

5. The scientific phenomena evaluation method according to claim 3 or 4, **characterized in that** the liquid supplied to one or more of the reservoirs (24, 26) is caused to communicate with another one or more of the reservoirs (28) via the channel before the absorption device is housed in another one or more of the reservoirs (28), and
the absorption device is housed in another one or more of the reservoirs (28) to start the flow of the liquid (34) in the channel.
